# EUROPEAN PATENT APPLICATION

(11) **EP 4 538 042 A1**
(43) Date of publication of application: **16.04.2025**
(21) Application number: 24195648.1
(22) Date of filing: 21.08.2024
(51) Int. Cl.: B41J 2/045, B41J 2/21, B41J 3/407

(54) **COATING ROBOT AND COATING METHOD**

(30) Priority: 10.10.2023 JP 2023175329
(71) Applicant: ABB SCHWEIZ AG, 5400 Baden (CH)
(72) Inventor: IIDA, Kisumi, Shinagawa-ku, 1416022 (JP); UMEZAWA, Norio, Shinagawa-ku, 1416022 (JP)
(74) Representative: Zimmermann & Partner Patentanwälte mbB

(57) **Abstract**

[PROBLEM] To provide a painting robot and painting method that can improve the painting quality, particularly at the edges of the paint film, by suppressing paint overflow at the nozzle.

[MEANS FOR SOLVING] Painting robot 10 is provided with painting head unit 50 comprising a plurality of nozzles 54 to discharge droplets and painting head 53 that is provided with piezoelectric substrate 62 to discharge the droplets from nozzles 54, robot arm R1 to which painting head unit 50 is mounted at the tip and that will move said painting head unit 50 to a desired position, and control unit 100 that is equipped with head control unit 130 to control the operation of piezoelectric substrate 62 of painting head 53 and arm control unit 120 to control the operation of robot arm R1, wherein head control unit 130 will control the operation of piezoelectric substrate 62 such that the amount of deformation of piezoelectric substrate 62 during the painting of edge painted area CR2 in painted area CR will be smaller than the amount of deformation of piezoelectric substrate 62 during the painting of normal painted area CR1.

## Description

### [TECHNICAL FIELD]

The present invention relates to a painting robot and painting method.

### [BACKGROUND ART]

Robotic painting using robots has become the mainstream in painting lines for vehicles such as automobiles. As an example of this robotic painting configuration, for example, Patent Literature 1 discloses the following configuration:

The painting robot disclosed in this Patent literature 1 discloses the control of the paint film thickness in the overlap painting area. More specifically, the paint control unit executes the painting such that, at the divided painting surface formed through each scan of nozzle head unit 50, a normal painted area is formed such that the painting will be performed to achieve the target paint film thickness, and an overlap painted area is formed such that the painting will be performed with a reduced paint discharge amount than is used in the normal painted area. In addition, when this painting is performed, by mixing the overlap painted areas in the front and back scans, painting may be performed such that the coating thickness of the overlap painted area after mixing will be the target paint film thickness.

### [PRIOR ART LITERATURE]

### [PATENT LITERATURE]

[PATENT LITERATURE 1] Japanese Examined Patent Application Publication No. 7285827

### [OUTLINE OF THE INVENTION]

### [PROBLEM TO BE SOLVED BY THE INVENTION]

However, in the nozzle forming surface, if the paint is overflowing around the nozzle, the overflowing paint will adhere to the paint that may be discharged from the nozzle, and as a result, the droplets will be discharged in an enlarged state. Therefore, the size of the droplets landing on the surface will be larger than the size of the droplets assumed to land on the paint site.

If there is landing of droplets such as these, which are larger than expected, contours may be formed, especially when forming the ends (contours) of the coating, and the step between the droplets that landed on the surface will become prominent rather than forming the sharp contours that had been expected.

In addition, the overflowing paint may solidify as a result of drying over time, and this paint may begin to form a film as a result of solidification on the nozzle forming surface. In this case, regardless of whether the paint is not discharged at all or if it is discharged, the solidification of the paint may reduce the open area of the nozzle, allowing only small droplets to be discharged.

In addition, the overflowing paint may cause abnormal discharge, in which the discharge direction of the droplets is changed into an unintended direction, and this type of abnormal discharge of droplets may also result in poor quality when forming the ends (contour) of the coating.

The present invention was created based on the above-noted circumstances, and aims to provide a painting robot and painting method that can improve the painting quality, in particular at the end of the paint film, by suppressing paint overflow at the nozzle.

### [MEANS FOR SOLVING THE PROBLEM]

In order to solve the above-noted problem, the first aspect of the present invention provides a painting robot to paint the painted area of a vehicle that is characterized by the fact that it is provided with a painting head unit comprising a plurality of nozzles to discharge droplets and a painting head that is provided with a piezoelectric substrate that may be driven to discharge the droplets from the nozzles, a robot arm to which the painting head unit is mounted at the tip and that will move said painting head unit to a desired position, and a control unit that is equipped with a head control unit to control the operation of the piezoelectric substrate of the painting head and an arm control unit to control the operation of the robot arm, wherein the head control unit will control the operation of said piezoelectric substrate such that the amount of deformation of the piezoelectric substrate during the painting of the edge painted area on the edge side of the painted area will be smaller than the amount of deformation of the piezoelectric substrate when painting the normal painted area on the inner side of the end side of the painted area.

In addition, according to the above-noted invention, when performing painting at the drive frequency of the piezoelectric substrate in the normal painted area, it is preferable to use a frequency for which the resonance of said piezoelectric substrate will be larger than the drive frequency of the piezoelectric substrate when performing painting of the edge painted area.

Also, in any of the inventions described above, it is preferable for the head control unit to control the drive of said piezoelectric substrate such that the amount of deformation of the piezoelectric substrate during the painting of the edge painted area will increase as it moves away from the contours of the edge painted area.

Also, in any of the inventions described above or in a combination thereof, it is preferable for the arm control unit to rotate the edge painted area located at the periphery of said painted area when performing painting of a painted area, as well as to control the operation of the robot arm such that painting will be performed of the normal painted area that is enclosed within the edge painted area after the completion of the painting of the edge painted area, while the head control unit will control the operation of said piezoelectric substrate such that the amount of deformation of the piezoelectric substrate during the painting of the edge painted area will be smaller than the amount of deformation of the piezoelectric substrate during the painting of the normal painted area.

Also, in any of the inventions described above or in a combination thereof, it is preferable for a convex or concave site to be formed around the opening part of the nozzle in the nozzle forming surface in which the opening part of the nozzle is exposed in the painting head.

Also, in any of the inventions described above or in a combination thereof, it is preferable for the head control unit perform control of the piezoelectric substrate such that it will apply a Pull-Push-Pull drive waveform to draw the paint into the inside of the nozzle, after which the paint is pushed out, and then the paint is once again drawn in after being pushed out.

Also, the second aspect of the present invention provides a painting method using a painting robot to paint the painted area of a vehicle that is characterized by the fact that the painting robot is provided with a painting head unit comprising a plurality of nozzles to discharge droplets and a painting head that is provided with a piezoelectric substrate that may be driven to discharge the droplets from the nozzles, a robot arm to which the painting head unit is mounted at the tip and that will move said painting head unit to a desired position, and control unit that is equipped with a head control unit to control the operation of the piezoelectric substrate of the painting head and an arm control unit to control the operation of the robot arm, wherein there is an edge painting step in which the head control unit controls the operation of said piezoelectric substrate such that the amount of deformation of the piezoelectric substrate during the painting of the edge painted area on the edge side of the painted area will be smaller than the amount of deformation of the piezoelectric substrate when painting the normal painted area on the inner side of the end side of the painted area, and an interior painting step to perform the painting of the normal painted area by operating the piezoelectric substrate in the state in which the amount of deformation of the piezoelectric substrate will be larger than that during the edge painting step after the edge painting step.

### [EFFECT OF THE INVENTION]

According to the present invention, it will be possible to provide a painting robot and painting method that can improve the painting quality, particularly at the edges of the paint film, by suppressing paint overflow at the nozzle.

### [BRIEF DESCRIPTION OF THE DRAWINGS]

[FIGURE 1] This is a schematic diagram showing the overall configuration of the painting robot according to one example of embodiment of the present invention.
[FIGURE 2] This is a diagram showing the front surface view of the nozzle forming surface for the nozzles that will discharge the paint in the painting head unit shown in Figure 1.
[FIGURE 3] This is a diagram showing the state in which multiple painting heads are arranged in a staggered shape in the painting robot shown in Figure 1.
[FIGURE 4] This is a cross-sectional view showing the configuration near the nozzle pressurization chamber in the painting robot shown in Figure 1.
[FIGURE 5] This is a plan view showing the configuration of the nozzle forming surface in another painting head unit that is different from the painting head unit shown in Figure 2.
[FIGURE 6] This is a diagram showing a schematic configuration of the paint supply mechanism or the like provided in the painting robot shown in Figure 1.
[FIGURE 7] This is a diagram showing a controlled schematic configuration centered on the control unit of the painting robot shown in Figure 1.
[FIGURE 8] This is a diagram showing the painted area formed using the painting robot shown in Figure 1.
[FIGURE 9] This is a diagram showing an example of the divided painting data to form the painted area shown in Figure 8.
[FIGURE 10] This is a cross-sectional view showing the state in which leaked paint has adhered to the area surrounding the nozzle due to paint overflow when forming the painted area shown in Figure 8.
[FIGURE 11] This is a diagram showing the state in which painting has been performed of the area near the edge painted area of the painting surface using the current droplet discharge method for the discharge of the discharge droplets to form the painted area shown in Figure 8.
[FIGURE 12] This is a diagram that schematically shows, for each pixel, the size of the droplets to be discharged near the edge painted data region for the discharge of the discharge droplets to form the painted area shown in Figure 8.
[FIGURE 13] This is a diagram showing the state in which painting has been performed near the edge painted area of the painting surface using the droplet discharge method according to this example of embodiment.
[FIGURE 14] This is a schematic diagram showing the size, when set for each pixel, of the droplets to be discharged pertaining to variant of the state shown in Figure 12

### [EXAMPLES OF EMBODIMENT OF THE INVENTION]

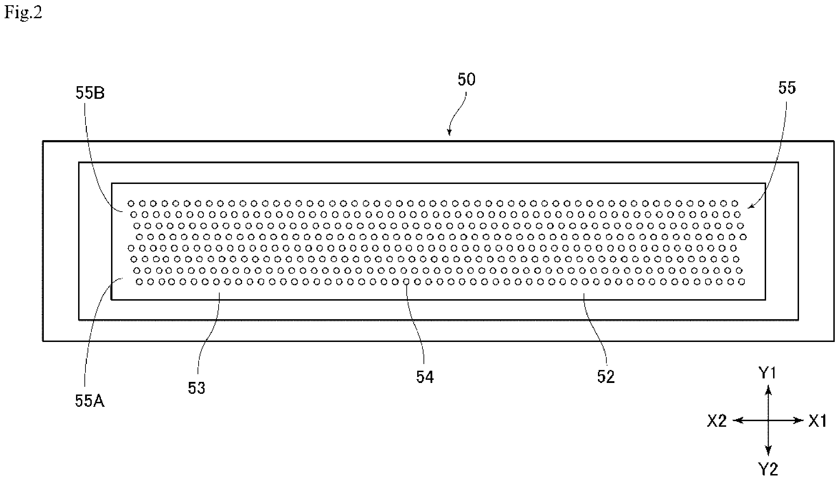

Painting robot 10 pertaining to each example of embodiment of the present invention will be described below with reference to the drawings. In the following description, if necessary, the X-direction is the longitudinal direction of nozzle forming surface 52 (painting head 53), while the X1 side is the right side in Figure 2, and the X2 side is the left side in Figure 2. The Y-direction is the short direction (width direction) of nozzle forming surface 52 (painting head 53), while the Y1 side is the upper side of the paper surface in Figure 2, and the Y2 side is the lower side of the paper surface in Figure 2.

Painting robot 10 of the present example of embodiment is intended to "paint" an object, such as a vehicle or vehicle part (hereinafter, vehicle parts that form a part of a vehicle shall also be described as a vehicle) positioned on a painting line in a car manufacturing plant, and to form a paint film on the surface of the object to be painted in order to protect that surface or to beautify that surface. Therefore, it is necessary to paint vehicles moving along the painting line at predetermined time intervals with a desired painting quality within a certain period of time.

However, the paint film that may be formed by performing painting with painting robot 10 not only protects the surface and improves the aesthetics, but may also be formed through the discharge of a functional liquid to provide some sort of function, such as an adhesive agent.

In addition, in painting robot 10 of the present example of embodiment, it will be possible to not only form the above-noted paint film, but it will also be possible to form various designs or images on the object to be painted, such as vehicles and vehicle parts. It should be noted that the object to be painted is not limited to vehicles and vehicle parts, and this object may be anything that requires painting, such as various parts for objects other than vehicles (for example, the exterior parts of airplanes or railways).

### (1-1. Overall construction of the inkjet vehicle painting robot)

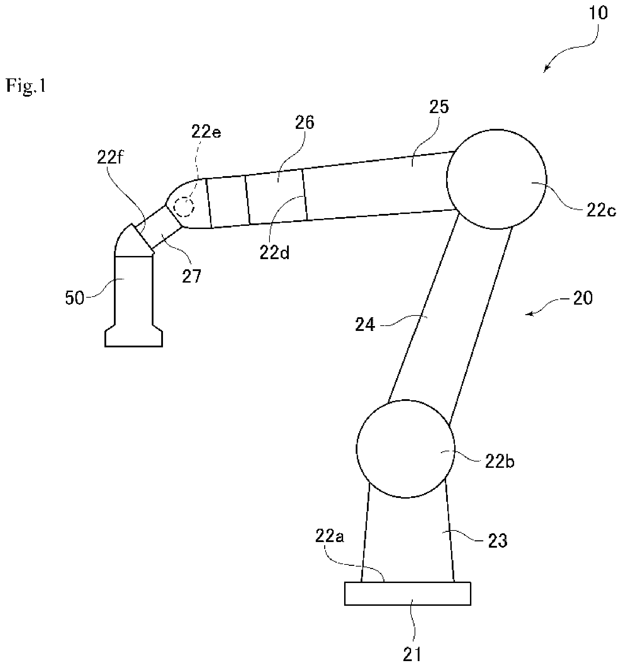

Figure 1 is a schematic diagram showing the overall configuration of painting robot 10 according to the first example of embodiment of the present invention. As shown in Figure 1, painting robot 10 has robot main body 20 and painting head unit 50 as its main components. Although painting robot 10 shown in Figure 1 is a six-axis vertically articulated robot that is shown as an example thereof, painting robot 10 may be any type of robot, such as a non-six-axis vertically articulated robot, a horizontally articulated robot, or an orthogonal robot, etc.

### (1-2. Main body of the painting equipment)

As shown in Figure 1, robot main body 20 has as its main components base 21, first through sixth rotating shafts 22a to 22f, leg unit 23, first turning arm 24, second turning arm 25, rotating arm 26, wrist unit 27, and a motor (not shown in the figure) to drive these components. The portion from leg unit 23 to wrist unit 27 corresponds to robot arm R1, but it is also acceptable for other portions, such as base 21 or the like, to correspond to robot arm R1.

Among these, base 21 is a unit that may be installed on the installation site such as a floor surface, but base 21 may be movable with respect to the installation site. Also, leg unit 23 is a portion that stands facing upward from base 21, and it is installed such that it may rotate in relation to base 21 via first rotating shaft 22a when driven by the motor (first motor) that is omitted from the figure. Leg unit 23 may also be configured so that it cannot rotate in relation to base 21.

Also, at the upper end of leg unit 23, first turning arm 24 is provided such that it can rotate via second rotating shaft 22b when driven by the motor (second motor) that is omitted from the drawing. Further, on the tip side of first turning arm 24, second turning arm 25 is provided such that it can rotate via third rotating shaft 22c when driven by the motor (third motor) that is omitted from the drawing.

Also, on the tip side of second turning arm 25, rotating arm 26 is provided such that it can rotate about the central axis of second turning arm 25. This rotating arm 26 may be rotated via fourth rotating shaft 22d when driven by the motor (fourth motor) that is omitted from the drawing. In addition, wrist unit 27 is provided on the tip side of rotating arm 26. This wrist unit 27 enables rotational movement around multiple [e.g., two] shafts of different orientations. In Figure 1, this rotating shaft capable of rotational movement refers to fifth rotating shaft 22e and sixth rotating shaft 22f, respectively. As a result, the orientation of painting head unit 50 can be controlled with high accuracy. It should be noted that the number of shafts may be any number as long as the number is two or more.

In addition, painting head unit 50 is attached to wrist unit 27, but painting head unit 50 may be provided such that it may be freely attached to or detached from wrist unit 27.

### (1-3. Painting head unit)

Painting head unit 50 will be described next. Figure 2 is a diagram that shows the front view of nozzle forming surface 52 for the nozzles to discharge the paint within painting head unit 50. As shown in Figure 2, painting head unit 50 is provided with a head cover (not shown in the figure), and various components are built into this head cover. As shown in Figure 2, nozzle forming surface 52 is provided with a plurality of nozzle rows 55 in which nozzles 54 are inclined relative to the longitudinal direction of painting head unit 50. This nozzle row 55 is provided in the present example of embodiment with first nozzle row 55A that is present on one side (Y2 side) of the main scanning direction (Y direction) and second nozzle row 55B that is present on the other side (Y1 side) of the main scanning direction.

Note that when the paint is to be discharged, the drive timing of each nozzle 54 is controlled such that, between the droplets discharged from the adjacent nozzle 54 in first nozzle row 55A, the droplets discharged from nozzle 54 in second nozzle row 55B are discharged. As a result, it will be possible to improve the dot density during painting.

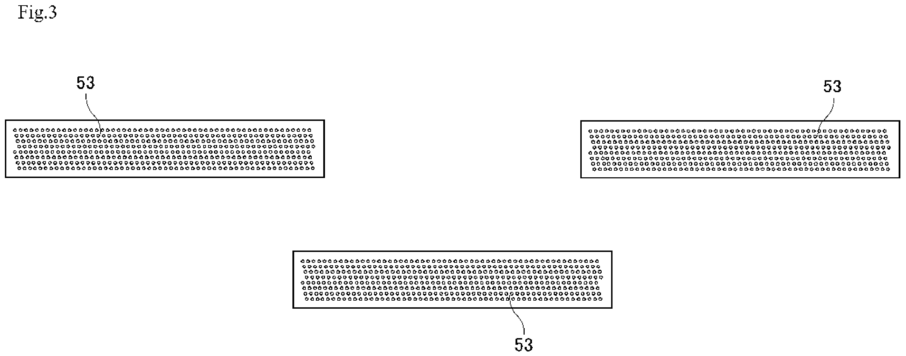

Incidentally, as shown in Figure 2, there is a single painting head 53 in nozzle forming surface 52. However, nozzle forming surface 52 may also have a head group consisting of a plurality of painting heads 53. In this case, Figure 3 shows an example of a configuration in which the plurality of painting heads 53 are arranged in an aligned and staggered arrangement, but the arrangement of painting heads 53 in the head group does not have to be a staggered arrangement.

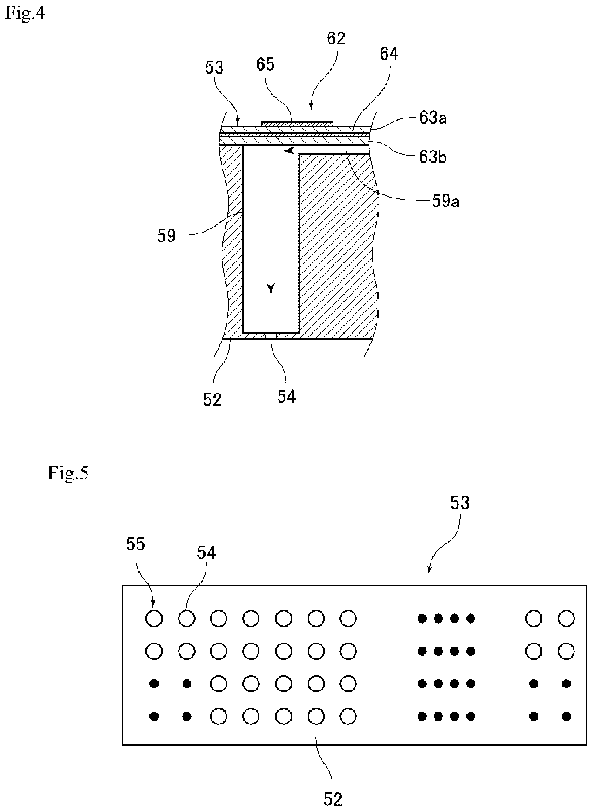

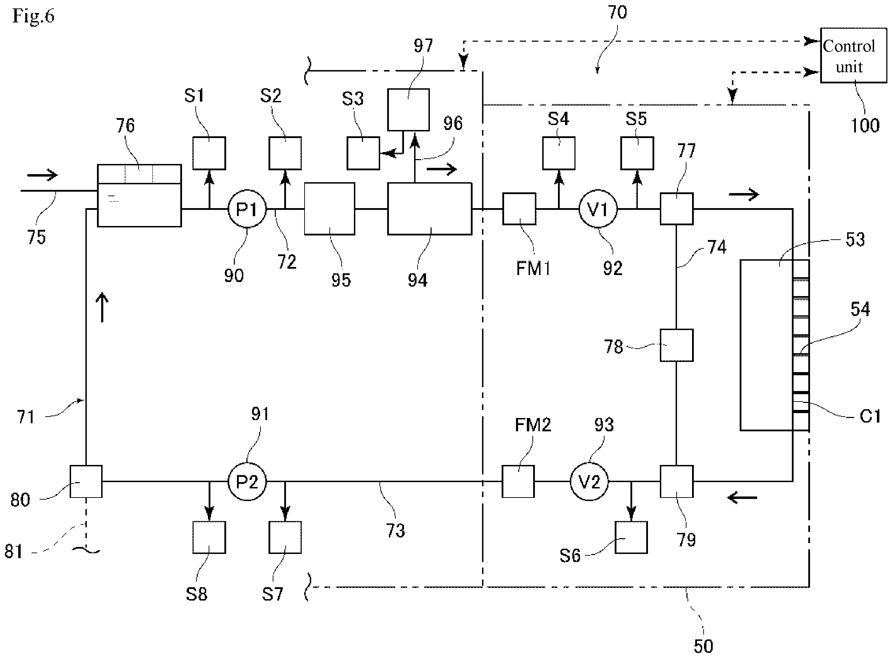

The paint may be supplied to nozzle pressurization chamber 59 shown in Figure 4 via paint supply channel 72 (see Figure 6), nozzle supply channel 59 within painting head 53, or another supply channel, but nozzle 54 may be formed in the specified site (such as the bottom surface) of this nozzle pressurization chamber 59. Any paint that was not discharged from nozzle 54 may be eliminated via a discharge channel (not shown in the figure) within painting head 53 that is connected to said nozzle pressurization chamber 59. The discharge channel within painting head 53 is connected to return flow channel 73 of paint supply mechanism 70, which will be described later.

As a result of this type of configuration, the paint that is supplied from paint supply channel 72 of paint supply mechanism 70, which will be described later, is discharged from nozzle 54 via a supply channel including nozzle supply channel 59a within painting head 53, and nozzle pressurization chamber 59. The paint that was not discharged from nozzle 54 is also returned from nozzle pressurization chamber 59 to return flow channel 73 of paint supply mechanism 70, which will be described later, via the discharge channel within painting head 53.

Also, as shown in Figure 4, piezoelectric substrate 62 is mounted on the top surface of nozzle pressurization chamber 59 (the side opposite to nozzle 54). Piezoelectric substrate 62 is provided with two piezoelectric ceramic layers 63a and 63b, which are piezoelectric substances, and is further provided with common electrode 64 and individual electrode 65. Piezoelectric ceramic layers 63a and 63b are extendable members that may telescope as a result of the application of voltage from the outside. Examples of the material that may be used as these piezoelectric ceramic layers 63a and 63b include, for instance, ceramic materials with ferroelectric properties such as lead zirconate titanate (PZT) ceramic material, NaNbO₃ ceramic material, BaTiO₃ ceramic material, (BiNa) NbO₃ ceramic material, and BiNaNb₅O₁₅ ceramic material.

Also, as shown in Figure 4, common electrode 64 is mounted between piezoelectric ceramic layer 63a and piezoelectric ceramic layer 63b. In addition, surface electrode (not shown in the figure) for use as a common electrode is formed on the top surface of piezoelectric substrate 62. Common electrode 64 and the surface electrode for use as the common electrode are electrically connected through a conductor (not shown in the figure) present in piezoelectric ceramic layer 63a. Individual electrodes 65 are also each mounted at a site opposite to nozzle pressurization chamber 59 described above. Furthermore, the portion of piezoelectric ceramic layer 63a that is sandwiched between common electrode 64 and individual electrode 65 is polarized in the thickness direction. Therefore, upon the application of voltage to individual electrode 65, the piezoelectric effect distorts piezoelectric ceramic layer 63a. Therefore, applying a predetermined drive signal to individual electrode 65 causes piezoelectric ceramic layer 63b to fluctuate relatively to reduce the volume of nozzle pressurization chamber 59, thereby forcing the discharge of the paint.

Although common electrode 64 is mounted on the top surface of nozzle pressurization chamber 59 in Figure 4, common electrode 64 is not limited to a configuration in which it is mounted on the top surface of nozzle pressurization chamber 59 as shown in Figure 4. For example, it is also acceptable to adopt a configuration in which common electrode 64 is mounted on the side surface of nozzle pressurization chamber 59 (a surface that is orthogonal or substantially orthogonal to the top surface), and it is also acceptable to use any other configuration as long as it is possible to favorably discharge the paint from nozzle 54.

### (1-4. Other configurations of the painting head unit)

Other configurations of painting head unit 50 will be described next. Figure 5 is a plan view illustrating the configuration of nozzle forming surface 52 of another painting head unit 50. As shown in Figure 5, multiple nozzles 54 may be aligned along the short direction (width direction; Y direction) of painting head 53 to constitute nozzle row 55. In the configuration shown in Figure 5, the plurality of nozzles 54 constitutes a row of nozzles 55 in line with the short direction (width direction; main scanning direction) of painting head 53, but it is also acceptable to have a configuration in which only one (single) nozzle 54 is arranged in the short direction (width direction; main scanning direction) of painting head 53. In other words, nozzle row 55 may be comprised of one nozzle 54.

Also, when painting a vehicle with painting head 53 as shown in Figure 5, the painting may be performed with the longitudinal direction of painting head 53 slightly tilted relative to the main scanning direction of painting head 53. For example, in the configuration of painting head 53 shown in Figure 2, if nozzle row 55 is inclined by an angle α relative to the main scanning direction, the longitudinal direction of painting head 53 may be inclined by an angle α relative to the main scanning direction of painting head 53. When tilted in this way, it will be possible to achieve painting that is equivalent to that of painting head 53 shown in Figure 2 simply by adjusting the discharge timing of the paint from each nozzle 54.

### (1-5. Paint supply mechanism)

Next, paint supply mechanism 70 will be described. Figure 6 is a diagram illustrating a schematic configuration of paint supply mechanism 70 and the like. The main constituents of paint supply mechanism 70 are paint circulation channel 71, external supply channel 75, air bubble removal member 76, supply pump 90, suction pump 91, first paint regulator 92, second paint regulator 93, degassing module 94, removal filter 95, pressure sensors S1 to S8, first flow meter FM1, and second flow meter FM2.

Paint circulation channel 71 is a channel for circulating the paint, and it includes paint supply channel 72, return flow channel 73, and bypass channel 74. Paint supply channel 72 is a channel to supply the paint supplied from external supply channel 75 or returned from return flow channel 73 towards painting head 53, and it is connected to the supply channel within painting head 53 described above.

Return channel 73 is a channel that is connected to the discharge channel within painting head 53 that was described above, and it will return the paint that was not discharged by painting head 53 back to air bubble removal member 76.

Bypass channel 74 is a channel that connects paint supply channel 72 and return flow channel 73. In other words, when bypass channel 74 is provided in parallel with painting head 53, if it is not possible to discharge paint from painting head 53, the paint will be flowed to this bypass channel 74 by switching the operation of three-way valve 77, which will be described later.

External supply channel 75 is a conduit to supply the paint that may be supplied from the storage site side of the paint, such as a circulation tank, to the interior of the tank body of air bubble removal member 76.

Air bubble removal member 76 is a member for removing any air bubbles that may be contained within the paint. This air bubble removal member 76 may be provided at a stable site at which the position will not change outside of robot arm R1. Also, air bubble removal member 76 is connected to paint supply channel 72 such that it can supply paint to paint supply channel 72, and it is also connected to return flow channel 73 such that it can receive the paint supplied from return flow channel 73. This air bubble removal member 76 is provided with tank body that may be sealed from the outside, and this tank body has an outlet to discharge gas from the air bubbles accumulated therein.

Paint supply channel 72 is also connected to three-way valve 77 downstream of first paint regulator 92, which will be described below. This three-way valve 77 is connected to the middle of paint supply channel 72 and also to bypass channel 74. Therefore, when painting, the upstream and downstream sides are opened more than three-way valve 77 of paint supply channel 72, resulting in the supply of paint to painting head 53. On the other hand, if no paint is applied, the paint flows from paint supply channel 72 to bypass channel 74, but the flow may be switched such that no paint is supplied to the downstream side of paint supply channel 72 (painting head 53 side).

Also, switch valve 78 is provided in the mid-section of bypass channel 74 described above. Actuating switch valve 78 allows the paint to flow through bypass channel 74.

Further, three-way valve 79 is connected to the downstream side of bypass channel 74 beyond switch valve 78, and this three-way valve 79 is further connected to the upstream side of return flow channel 73 (or in other words, painting head 53 side of return flow channel 73) and the downstream side (in other words, suction pump 91 side described later in return flow channel 73). Therefore, when painting is performed, the upstream and downstream sides are opened more than three-way valve 79 of return flow channel 73, and the paint that is not discharged from painting head 53 flows towards the downstream side of return flow channel 73. On the other hand, when no painting is performed, three-way valve 79 is switched such that the paint flowing through bypass channel 74 flows to the downstream side of return flow channel 73 (suction pump 91 side).

Also, within return flow channel 73, switching valve 80 is installed downstream of suction pump 91, which will be described later. Switching valve 80 is also a three-way valve, and is connected to outlet 81 in addition to the upstream and downstream sides of return flow channel 73. In the normal state, this switching valve 80 will be in a state in which paint flows in the upstream and downstream sides of return flow channel 73. However, if, for example, liquid to be used for washing flows from paint supply channel 72 to return flow channel 73 via painting head 53 or bypass channel 74, the actuation of switching valve 80 is switched, and said liquid to be used for washing (waste liquid) described above is discharged through discharge channel 81.

Return channel 73 is connected to air bubble removal member 76 described above on the downstream side of switching valve 80.

In addition, supply pump 90 is connected to the middle part of paint supply channel 72. Supply pump 90 corresponds to the paint transfer means and the paint supply means. Supply pump 90 is a means for applying positive pressure to the paint flowing through paint supply channel 72 towards the downstream side of said supply pump 90. As supply pump 90, it is preferable to use a gear pump that can control the supply amount of paint by controlling the rotational speed. However, supply pump 90 may use a pump other than a gear pump. The operation of this supply pump 90 may be controlled by control unit 100, which will be described later. Thereby, the operation of supply pump 90 may be controlled to be a predetermined pressure set point.

In addition, suction pump 91 is connected to the middle part of return flow channel 73. Suction pump 91 corresponds to the paint transfer means and paint recovery means. Suction pump 91 is a means of applying a negative pressure to the paint flowing through return flow channel 73 upstream of supply pump 90. For suction pump 91, it is preferable to use a gear pump that can control the supply amount of paint by controlling the rotational speed, similar to supply pump 90 described above. However, suction pump 91 may also use a pump other than a gear pump. The operation of this supply pump 91 may be controlled by control unit 100, which will be described later. As a result, the operation of the suction pump 91 may be controlled such that its downstream side will be a predetermined pressure set point.

Also, in paint supply channel 72, first paint regulator 92 is installed on the downstream side of supply pump 90. First paint regulator 92 mitigates the pulsation in supply pump 90 to supply paint at a constant pressure. First paint regulator 92 corresponds to the regulating valve and a first regulating valve. This first paint regulator 92 may be controlled by control unit 100 to be described later, enabling the adjustment of the degree of opening according to the control air pressure or electrical signals. This allows the pressure downstream of first paint regulator 92 to be controlled to be a predetermined pressure set point in response to the pressure upstream of first paint regulator 92.

Also, in return flow channel 73, second paint regulator 93 is installed on the upstream side of suction pump 91. Second paint regulator 93 mitigates the pulsation in suction pump 91 and draws in the paint at a constant pressure (negative pressure). This second paint regulator 93 may similarly be controlled by control unit 100 to be described later, enabling the adjustment of the degree of opening according to the control air pressure or electrical signals. This allows the pressure upstream of second paint regulator 93 to be controlled to be a predetermined pressure set point in response to the pressure downstream of second paint regulator 93.

Also, in paint supply channel 72, degassing module 94 is installed upstream of first paint regulator 92 and downstream of supply pump 90. Degassing module 94 is installed downstream of paint supply channel 72 beyond removal filter 95 described below, and is a member for removing (degassing) dissolved gases that may be dissolved in the paint.

Also, in paint supply channel 72, removal filter 95 is installed upstream of degassing module 94 and downstream of supply pump 90. Removal filter 95 removes foreign matter that may be contained in the paint flowing through paint supply channel 72. Removal filter 95 ensures that painting head 53 can continue to operate normally by, for example, removing gross foreign matter and pigment aggregates from paints containing pigments.

Next, pressure sensors S1 to S8 and flow meters FM1 and FM2 will be described. In paint supply channel 72, pressure sensor S1 is installed upstream of supply pump 90. In addition, in paint supply channel 72, pressure sensor S2 is installed downstream from supply pump 90 and upstream of removal filter 95. Pressure sensor S1 measures the pressure of the paint discharged from suction pump 90 and sends the measurement results to control unit 100. Also, pressure sensor S2 measures the pressure of the paint discharged from suction pump 90 and sends the measurement results to control unit 100.

In this way, pressure sensors S1 and S2 enable the accurate measurement of the estimated pressure of suction pump 90 by measuring the pressure of the paint upstream and downstream of suction pump 90. The estimated pressure of suction pump 90 may be the average value of the pressure value of pressure sensor S1 and the pressure value of pressure sensor S2, or it may be the pressure value of either sensor. The above-noted estimated pressures may also be used to calculate the water load pressure and water head pressure difference, to be described below.

Degassing module 94 described above is also connected to vacuum pump 97 via suction conduit 96. Vacuum pump 97 is an apparatus to depressurize the interior of the housing of degassing module 94 (the interior of the hollow fiber membrane), as described above. This decompression removes (degasses) dissolved gases that may be dissolved in the paint supplied to the housing.

Pressure sensor S3 also measures the pressure of suction conduit 96 between vacuum pump 97 and degassing module 94 described above.

In paint supply channel 72, first flow meter FM1 is installed downstream of degassing module 94 and upstream of first paint regulator 92. First flow meter FM1 measures the flow rate of the paint fed to first paint regulator 92 and transmits the measurement results to control unit 100. Because this first flow meter FM1 is a contactless flow meter without any moving parts, such as an ultrasonic, optical, electromagnetic, or thermal meter, etc., first flow meter FM1 may be installed outside paint supply channel 72. Note that it is also acceptable to use a flow meter with moving parts as first flow meter FM1.

Also, in paint supply channel 72, pressure sensor S4 is installed downstream of first flow meter FM1 and upstream of first paint regulator 92. Further, in paint supply channel 72, pressure sensor S5 is installed downstream of first paint regulator 92 and upstream of three-way valve 77. Pressure sensor S4 measures the supply pressure of paint to first paint regulator 92 and sends the measurement results to control unit 100. Also, pressure sensor S5 measures the pressure of the paint to be discharged from first paint regulator 92 and sends the measurement results to control unit 100.

In this way, pressure sensors S4 and S5 enable the accurate measurement of the estimated pressure of first paint regulator 92 by measuring the pressure of the paint upstream and downstream of first paint regulator 92. The estimated pressure of first paint regulator 92 may be the average value of the pressure value of pressure sensor S4 and the pressure value of pressure sensor S5, or it may be the pressure value of either sensor.

Although it is preferable that the above-noted pressure sensor S4 is provided in paint supply mechanism 70, it is also acceptable to adopt a configuration in which this pressure sensor S4 is omitted. In addition, pressure sensor S4 may be provided on the painting head unit 50 side, but it may be provided on the second turning arm 25 side (robot arm R1 side). Pressure sensor S4 may also be provided upstream of first flow meter FM1.

Further, in return flow channel 73, pressure sensor S6 is installed downstream of three-way valve 79 and upstream of second paint regulator 93. Also, in return flow channel 73, pressure sensor S7 is installed further downstream of flow meter FM2 (to be described later) that is downstream of second paint regulator 93. Pressure sensor S6 measures the supply pressure of paint to second paint regulator 93 and sends the measurement results to control unit 100. Pressure sensor S7 also measures the pressure of the paint discharged from second paint regulator 93 (in other words, the pressure of the paint supplied to suction pump 91) and sends the measurement results to control unit 100.

In this way, pressure sensors S6 and S7 enable the accurate measurement of the estimated pressure of second paint regulator 93 by measuring the pressure of the paint upstream and downstream of second paint regulator 93. The estimated pressure of second paint regulator 93 may be the average value of the pressure value of pressure sensor S6 and the pressure value of pressure sensor S7, or it may be the pressure value of either sensor.

It should be noted that in return flow channel 73, the pressure sensor may also be positioned downstream of second paint regulator 93 and upstream of flow meter FM2.

Also, in return flow channel 73, second flow meter FM2 is installed on the upstream side of second paint regulator 93. Second flow meter FM2 measures the flow rate of the paint fed to suction pump 91 and transmits the measurement results to control unit 100. This second flow meter FM2, as is the case with first flow meter FM1 described above, is also a contactless flow meter without any moving parts, such as an ultrasonic, optical, electromagnetic, or thermal meter, etc., so the detailed description of this part is omitted. Note that it is also acceptable to use a flow meter with moving parts as second flow meter FM2.

Also, in return flow channel 73, pressure sensor S8 is installed downstream of suction pump 91 and upstream of switching valve 80 described above. Pressure sensor S8 measures the pressure of the paint discharged from suction pump 91 and sends the measurement results to control unit 100.

In this way, pressure sensors S7 and S8 enable the accurate measurement of the estimated pressure of suction pump 91 by measuring the pressure of the paint upstream and downstream of suction pump 91. The estimated pressure of suction pump 91 may be the average value of the pressure value of pressure sensor S7 and the pressure value of pressure sensor S8, or it may be the pressure value of either sensor.

### [1-8. Schematic configuration of the control unit]

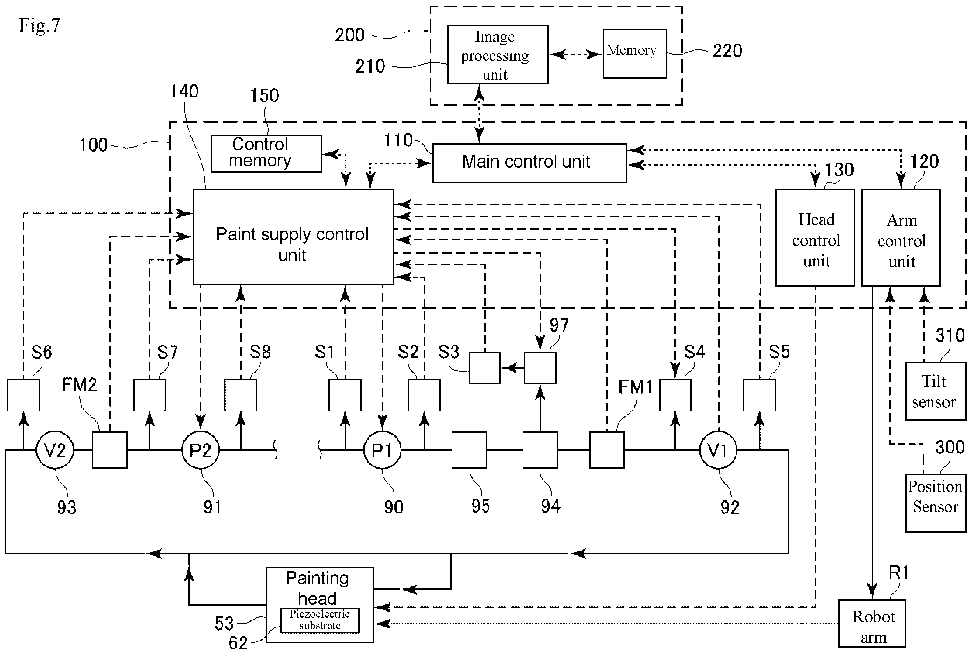

Next, a schematic configuration of control unit 100 for controlling the actuation of painting robot 10 will be described. Figure 7 is a diagram that shows a controlled schematic configuration centered on control unit 100 of painting robot 10. As shown in Figure 7, the primary constituents of control unit 100 are main control unit 110, arm control unit 120, head control unit 130, paint supply control unit 140, control memory 150, position sensor 300, and tilt sensor 310. Further, painting robot 10 is connected to image processing apparatus 200 to constitute the painting robot system (the symbols are omitted).

Main control unit 110, arm control unit 120, head control unit 130, paint supply control unit 140, and image processing unit 210 described below are composed of a CPU (Central Processing Unit), a storage site (Read Only Memory (ROM), Random Access Memory (RAM), or non-volatile memory, etc.), and other elements. Image processing unit 210 may use a GPU (Graphics Processing Unit) together with a CPU having excellent image processing performance or in place of the CPU.

Of the above-described control configuration, main control unit 110 is the portion that transmits a predetermined control signal to the above-described arm control unit 120, head control unit 130, and paint supply control unit 140 such that each motor (first to sixth motor) of robot arm R1, each actuation unit of paint supply mechanism 70, and piezoelectric substrate 62 will cooperate to execute the painting of the object to be painted.

Arm control unit 120 is also the portion that controls the drive of each motor (first to sixth motor) of robot arm R1 described above. Arm control unit 120 is provided with an arm memory (not shown in the figure), wherein the arm memory stores data relating to the trajectory of painting head 53 (trajectory data), which is created by robot teaching in consideration of the coating width of painting head 53 that can be coated, and posture data relating to the posture such as the inclination of painting head 53.

Further, arm control unit 120 controls each motor (first to sixth motor) of robot arm R1 described above based on the trajectory data and posture data stored in the arm memory and the image processing in image processing unit 210, which will be described later. As a result of this control, painting head 53 can pass through the desired position to execute painting at the desired speed or can stop at a predetermined position. The arm memory may be provided by painting robot 10, but it is also acceptable for the arm memory to be outside of painting robot 10 (such as memory 220 shown in Figure 7), enabling the transmission and receipt of information to the arm memory via wired or wireless communication means.

Head control unit 130 is also the portion that controls the operation of piezoelectric substrate 62 within painting head unit 50 based on the image processing in image processing apparatus 200. This head control unit 130 controls the discharge of paint based on the divided painting data corresponding to the position when the predetermined position in the trajectory data has been reached by means of a means to detect the positions of position sensor 300 and tilt sensor 310, etc. described below. In this case, the drive frequency of piezoelectric substrate 62 is controlled to control the number of dots [number of droplets] discharged from nozzle 54, or the drive frequency and/or the voltage applied to piezoelectric substrate 62 is controlled in order to control the amount of deformation of said piezoelectric substrate 62 such that the film thickness applied to the vehicle will be uniform.

By controlling the amount of deformation of piezoelectric substrate 62 based on the drive frequency applied to piezoelectric substrate 62, the droplet size will be the largest when performing control of the droplet size and driving piezoelectric substrate 62 using a drive frequency that matches the natural frequency of said piezoelectric substrate 62. Therefore, the droplet size can be controlled such that it will be smaller as the applied drive frequency deviates from the natural frequency. Also, by controlling the amount of deformation of piezoelectric substrate 62 based on the voltage applied to piezoelectric substrate 62, it will be possible to perform control such that the droplet size will be larger as the voltage to be applied to said piezoelectric substrate 62 increases when performing control of the droplet size.

Paint supply control unit 140 is also the part that controls the supply of paint to painting head 53, and more specifically, it controls the operation of each actuation site in paint supply mechanism 70, such as supply pump 90, suction pump 91, first paint regulator 92, second paint regulator 93, vacuum pump 97, three-way valves 77 and 79, switch valve 78, and switching valve 80, or the like. At this time, it is also acceptable for paint supply control unit 140 to control the actuation of an actuation site, such as the pump or valves described above, such that the paint may be supplied to painting head 53 at a constant pressure. However, it is also acceptable for paint supply control 140 to control the actuation of an actuation site, such as the pump or valves described above, such that the paint may be supplied to painting head 53 at a constant flow rate.

Here, paint supply control unit 140 can access control memory 150, and as a result of this access, it is possible to read the data related to control such as the pressure set point stored in control memory 150.

Also, position sensor 300 is a sensor that detects the current position of painting head 53. Examples of the sensors that may be used as position sensor 300 include rotary encoders, resolvers, laser sensors, and various other sensors. In addition, tilt sensor 310 is a sensor that detects an angle of inclination of painting head 53. Examples of the sensors that may be used as tilt sensor 310 include, for example, gyro sensors, acceleration sensors, tilt sensors, and various other sensors.

### (2. Droplet discharge control)

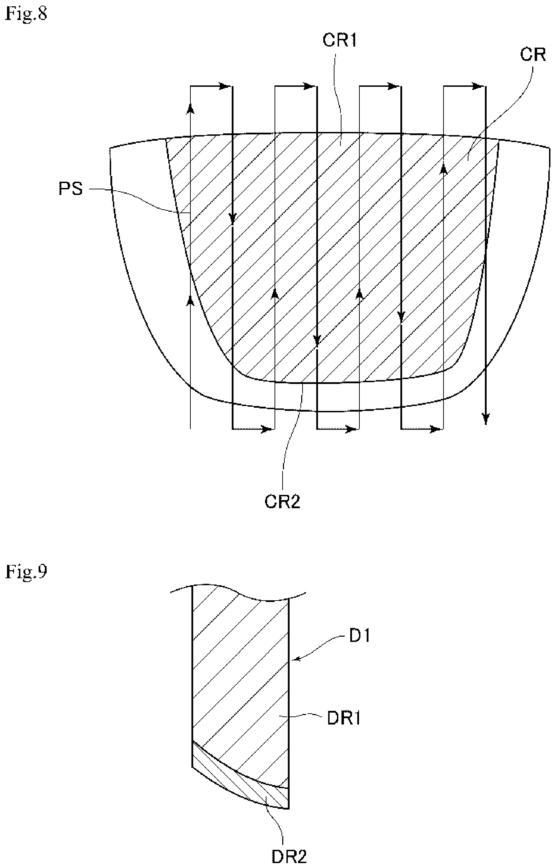

Next, the control when discharging the droplets from nozzle 54 of painting head 53 to form painted area CR on the object to be painted will be described, as shown in Figure 8. In the present example of embodiment, image processing apparatus 200 generates the image data corresponding to painted area CR as shown in Figure 8, but the width of painted area CR is generally sufficiently larger than the width of painting head 53.

When the width of painted area CR is adequately larger than the width of painting head 53 in this way, image processing apparatus 200 will generate divided painting data D1 in which the image data is divided into strips to match the paintable width (paint path) of painting head 53. Figure 9 shows an example of divided painting data D1. By executing the discharge of the paint based on this type of divided painting data D1, it will be possible to perform painting for each scan (for each paint path) of painting head unit 50.

Because this divided painting data D1 is in a strip-shape as described above, sites such as the painting start site or the painting end site will normally be a site that is positioned on the edge side of the painted area. Also, both edges of the line direction of divided painting data D1 will similarly be sites positioned at the edge sides of the painted area.

Below, the data area on inner side from the edge side that is not positioned on the edge side of the painted area (the data area to form the paint film having the normal film thickness) in divided painting data D1 shall be treated as normal painted data area DR1. Further, the data area that corresponds to the site that is positioned on the furthest edge side of the painted area in divided painting data D1 shall be treated as edge painting data area DR2.

After generating this type of divided painting data D1, main control unit 110 will transmit a control signal to execute the painting to arm control unit 120, head control unit 130, and paint supply control unit 140 based on the above-noted divided painting data D1. By doing this, arm control unit 120 will drive at least one of the motors built into robot arm R1 at the specified drive speed such that it will be possible to execute the painting of the object to be painted. Also, paint supply control unit 140 will initiate the discharge of paint from any of nozzles 54 of painting head unit 50 when painting head unit 50 has reached the specified spatial position in relation to the object to be painted according to position sensor 300 or tilt sensor 310.

At that time, head control unit 130 controls the drive of piezoelectric substrate 62 of each nozzle 54 such that the paint will be sequentially discharged from nozzle 54 that has reached the edge of the object to be painted. As a result, painted area CR as shown in Figure 8 will be formed on the object to be painted.

Here, within the above-noted painted area CR, normal painted area CR1 that is formed as a result of the discharge of paint corresponding to normal painting data area DR1, and edge painted area CR2 that is formed as a result of the discharge of paint corresponding to edge painting data area DR2 will each be formed for each respective painting path PS. The details of this (the details of the control of the discharge of droplets) will be described next.

### (2-1. Details of the control of the discharge of droplets)

During the discharge of the droplets, within normal painting data area DR1, a determination will be made regarding whether or not to discharge droplets of paint from nozzle 54 in correspondence to the specified film thickness, and regarding the size of the droplets of paint to be discharged.

For example, by adjusting the drive frequency or voltage of piezoelectric substrate 62, the droplet size can be adjusted to eight levels. In this case, within normal painted area CR1 based on normal painting data area DR1, the paint film will be formed through the discharge of droplets of a comparatively large size in order to ensure an adequate thickness of the paint film. Here, the smallest droplet shall be treated as droplet 1, while the droplet that is one size larger than this droplet shall be treated as droplet 2, and each subsequently larger droplet may be similarly classified such that the largest droplet may be treated as droplet 8. In this case, in Figure 9, for example, painting may be executed using droplets 6 to 8 overall in painting that may be performed based on normal painting data area DR1.

By doing this, in particular, when drive is initiated from a state in which the drive of painting head 53 has been stopped, a comparatively large pressure change will be generated within nozzle 54 that has been associated with said piezoelectric substrate 62 in particular. Similarly, when the drive is stopped from the state in which painting head 53 is being driven, a comparatively large pressure change will occur within nozzle 54 that has been associated with said piezoelectric substrate 62 in particular.

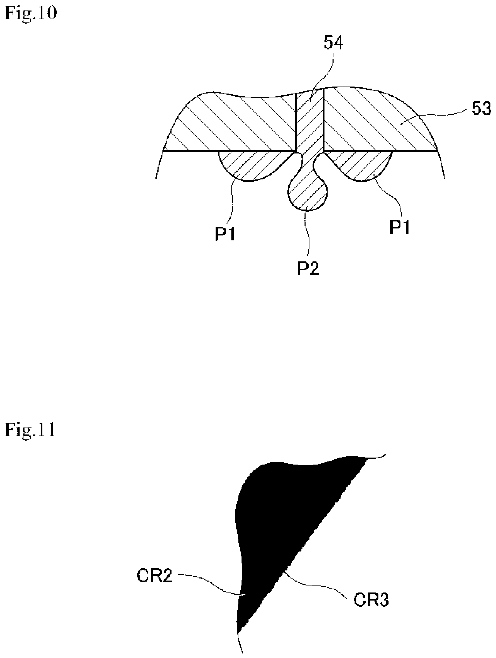

When this type of pressure change occurs, there may be instances in which paint overflow occurs from the meniscus that is formed near the opening of nozzle 54. Below, the site [droplet] that may be formed around nozzle 54 of painting head 53 as a result of paint overflow shall be treated as leaked paint P1. Figure 10 is a cross-sectional diagram that shows the state of the adhesion of leaked paint P1 in the area surrounding nozzle 54 as a result of paint overflow. As shown in Figure 10, if leaked paint P1 has been formed around nozzle 54 in nozzle forming surface 52, there is the possibility that leaked paint P1 may adhere to [entrap] discharged droplet P2 that may be newly discharged from nozzle 54.

When this happens, discharged droplet P2 may adhere to the object to be painted in a state that is larger than the normal droplet size. As a result, in the painted area corresponding to edge painting data area DR2 in particular, the impact of droplets that are bigger than the expected droplet size will lead to a state of prominent level differences.

Figure 11 is a diagram that shows the state in which painting has been performed near edge painted area CR2 on the painted surface (painted area CR) using the current droplet discharge method for the discharge of discharged droplet P2. As shown in this Figure 11, according to the current droplet discharge method, leaked paint P1 will be formed near nozzle 54 as a result of the effects of pressure changes, and because discharged droplet P2 will be discharged in the state of the adhesion (entrapment) of this leaked paint P1, stepped contour CR3 will be formed, preventing the formation of a sharp contour. This will, in turn, lead to decreased boundary quality in edge painted area CR2 of painted area CR.

Also, if it is not possible to discharge the droplets from nozzle 54 due to the effects of leaked paint P1, it will not be possible to discharge the droplets even if nozzle 54 reaches the discharge start position at which the droplets should be discharged. At that time, it will be possible to discharge the droplets from nozzle 54 if it is possible to provide the paint with a pressure that can destroy the film that resulted due to solidification as a result of drying or the surface tension of leaked paint P1. However, in this case, leaked paint P1 or the destroyed film may obstruct the discharge of the droplets. Therefore, in this case, there is the possibility of the discharge of smaller droplets than normal, or of painting failure in which the specified film thickness is not achieved.

In addition, the overflowing paint may cause abnormal discharge, in which the discharge direction of the droplets is changed into an unintended direction, and this type of abnormal discharge of droplets may also result in poor quality when forming the ends (contour) of the coating.

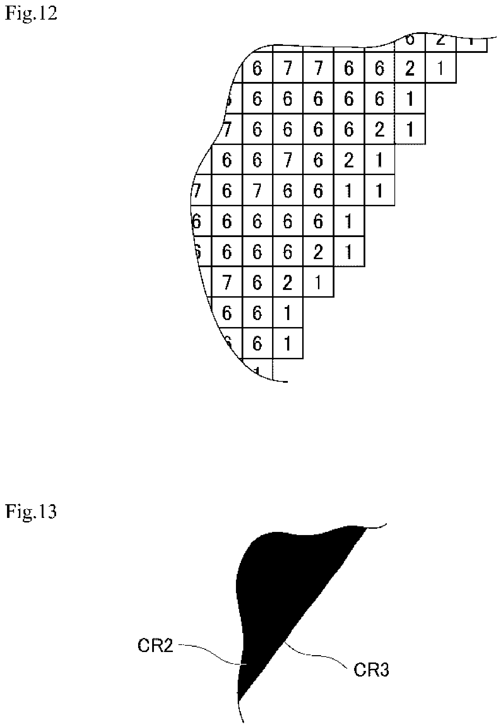

In contrast, in the present example of embodiment, edge painting data area DR2 may be formed such that there will be discharge of droplets of a smaller size (such as droplet 1 or droplet 2) than when discharging droplets based on normal painting data area DR1 when discharging droplets based on edge painting data area DR2. Figure 12 is a diagram that schematically illustrates the size of droplets to be discharged, for each pixel, near edge painting data area DR2. As shown in this Figure 12, edge painting data area DR2 is formed such that there will be discharge of droplets of a smaller size, such as droplet 1 or droplet 2, in the pixels that may become contour CR3 of painted area CR after the impact of the droplets.

Edge painting data area DR2 is a data area that includes the pixels at the furthest edge corresponding to contour CR3 after painting, and it is acceptable for only the pixels at the furthest edge to correspond to edge painting data area DR2, or for the pixels from the pixels at the furthest edge up to several pixels on the inner side of the data to correspond to edge painting data area DR2.

Also, in edge painting data area DR2, in the pixels that may form contour CR3 of painted area CR after the impact of the droplets, in addition to droplets of a larger size such as droplets 6 to 8, it is also acceptable to form edge painting data area DR2 such that there will be discharge of droplets of a smaller size such as droplet 1 or droplet 2 in the sites adjacent to those larger size droplets.

Painting may be executed using the respective painting paths based on divided painting data D1 having edge painting data area DR2 formed in this manner. By doing this, in each respective painting path, at the start of painting and at the end of painting, the amount of deformation (drive amount) of piezoelectric substrate 62 will decrease to ensure the discharge of droplets of a smaller size than when painting normal painting data area DR1. Further, edge painted area CR2 in painted area CR will be formed in this state (corresponding to the edge painting step).

Therefore, in particular, when drive is initiated from a state in which the drive of painting head 53 has been stopped, it will be possible to inhibit an increase in the pressure change within nozzle 54 that has been associated with said piezoelectric substrate 62. Similarly, when the drive is stopped from the state in which painting head 53 is being driven, it will be possible to inhibit an increase in the pressure change within nozzle 54 that has been associated with said piezoelectric substrate 62.

Therefore, as shown in Figure 10, it will be possible to inhibit the formation of leaked paint P1 near the opening of nozzle 54, and as a result, it will be possible to inhibit the adhesion (entrapment) of leaked paint P1 in discharged droplet P2 to be newly discharged from nozzle 54.

Following the execution of the above-noted edge painting step, piezoelectric substrate 62 will be operated in the state in which the amount of deformation of piezoelectric substrate 62 is larger than in said edge painting step in order to perform the painting of normal painted area CR1 (corresponding to the interior painting step).

Here, Figure 13 shows the state of painting near edge painted area CR2 of painted area CR using the droplet discharge method according to the present example of embodiment. As shown in this Figure 13, according to the droplet discharge method of the present example of embodiment, it will be possible to form sharp contours with alleviation of the level difference in contour CR3 of painted area CR2 in comparison to the conventional droplet discharge method shown in Figure 11. Therefore, it will be possible to improve the boundary quality of edge painted area CR2 of painted area CR.

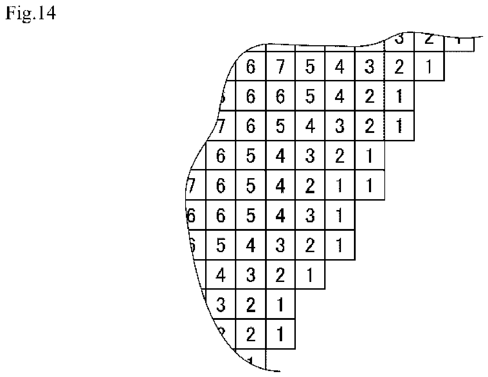

In order to further inhibit the effects of pressure changes, it is also acceptable for head control unit 130 to control the drive of piezoelectric substrate 62 such that the amount of deformation of said piezoelectric substrate 62 during the painting of edge painted area CR2 will increase as the distance from contour CR3 of that edge painted area CR2 increases. Figure 14 shows this type of state in which the size of the droplets is set for each pixel, unlike in Figure 12. Figure 14 shows the state in which the size of the droplets gradually increases from droplet 1 as the distance from contour CR3 increases.

### (3. Effects)

As described above, painting robot 10 to perform painting of painted area CR of a vehicle is provided with painting head unit 50 comprising a plurality of nozzles 54 to discharge droplets and painting head 53 that is provided with piezoelectric substrate 62 that may be driven to discharge the droplets from nozzles 54, robot arm R1 to which painting head unit 50 is mounted at the tip and that will move said painting head unit 50 to a desired position, and control unit 100 that is equipped with head control unit 130 to control the operation of piezoelectric substrate 62 of painting head 53 and arm control unit 120 to control the operation of robot arm R1.

Further, head control unit 130 will control the operation of piezoelectric substrate 62 such that the amount of deformation of said piezoelectric substrate 62 during the painting of edge painted area CR2 on the edge side of painted area CR will be smaller than the amount of deformation of piezoelectric substrate 62 during the painting of normal painted area CR1 on the inner side from the edge side of painted area CR.

In this way, during the painting of edge painted area CR2 that corresponds to at least one of the timing of the start of painting and the end of painting at which timing there will be a significant pressure change, head control unit 130 will control the operation of piezoelectric substrate 62 such that the amount of deformation of piezoelectric substrate 62 will be smaller than the amount of deformation of piezoelectric substrate 62 during the painting of normal painted area CR1 on the interior of painted area CR. As a result, it will be possible to lessen the effects of pressure changes due to the deformation of piezoelectric substrate during the painting of edge painted area CR2. As a result, it will be possible to inhibit the formation of leaked paint P1 near the opening of nozzle 54. Therefore, it will be possible to inhibit the adhesion (entrapment) of leaked paint P1 in discharged droplet P2 to be newly discharged from nozzle 54.

Also, by inhibiting the formation of leaked paint P1 near the opening of nozzle 54, it will be possible to prevent the obstruction of the discharge of droplets by leaked paint P1 or the destroyed film. As a result, it will be possible to prevent an inability to discharge the droplets even if nozzle 54 has reached the discharge start position at which the droplets should be discharged. Further, it will also be possible to prevent painting failures in which the specified film thickness is not achieved due to the discharge of droplets that are smaller than normal.

Also, it will be possible to prevent the occurrence of abnormal discharge in which the droplet discharge direction is changed to an unintended direction as a result of paint that has overflowed.

Further, during the painting of edge painted area CR2, it will be possible to reduce the size of the droplets to be discharged from nozzle 54 to be even smaller than the size of the droplets during the painting of normal painted area CR1. As a result, it will be possible to reduce any level differences between the impacted droplets during the formation of contour CR3 of painted area CR, and this will, in turn, make it possible to form sharp contours with higher painting quality.

Also, according to the present example of embodiment, the drive frequency of piezoelectric substrate 62 in normal painted area CR1 can be made to be a frequency at which there will be larger resonance in said piezoelectric substrate 62 in comparison to the drive frequency of piezoelectric substrate 62 during the painting of edge painted area CR2.

By controlling piezoelectric substrate 62 in this manner, the drive frequency of piezoelectric substrate 62 during the painting of edge painted area CR2 that corresponds to at least either the start of painting or the end of painting will be in a state in which it deviates from the frequency during resonance (natural frequency). The result will be a state that facilitates drive in the direction to negate the vibration of piezoelectric substrate 62. Therefore, it will be possible to reduce the size of the droplets to be discharged from nozzle 54 during the painting of edge painted area CR2. As a result, it will be possible to prevent the overflowing of paint from nozzle 54 due to an increase in the pressure changes in the paint during the painting of edge painted area CR2. Therefore, it will be possible to inhibit the adhesion (entrapment) of leaked paint P1 in discharged droplet P2 to be newly discharged from nozzle 54.

Also, it will be possible to reduce any level differences between the impacted droplets during the formation of contour CR3 of painted area CR, and this will, in turn, make it possible to form sharp contours with higher painting quality.

Further, in the present example of embodiment, it is also acceptable for head control unit 130 to control the drive of piezoelectric substrate 62 such that the amount of deformation of said piezoelectric substrate 62 during the painting of edge painted area CR2 will increase as the distance from the contours of edge painted area CR2 increases.

When performing control in this manner, the size of the droplets that may be discharged from nozzle 54 will increase moving from the edge to the center side of painted area CR. In other words, by gradually reducing the size of the droplets that may land as the operation moves towards the edge of the paint film that may be formed, it will be possible to form a tilted portion in the paint film. Therefore, by gradually reducing the size of the droplets that have landed as the operation moves towards the edge side, it will be possible to inhibit the flow of paint towards the edge side, making it possible to further improve the painting quality.

### (4. Variants)

Although the first example of embodiment of the present invention was described above, the present invention may be changed in various ways in addition to the above-noted example of embodiment. The variants are described below.

Instead of painting path PS in the above-noted example of embodiment as shown in Figure 8, it is also acceptable for arm control part 120 to rotate the edge painted area positioned at the boundary of painted area CR when performing the painting of said painted area CR. Further, after the painting of edge painted area CR has been completed, in addition to controlling the operation of robot arm R1 such that the painting of normal painted area CR1 that is enclosed within edge painted area CR2 will be performed, it is also acceptable for head control part 130 to control the operation of piezoelectric substrate 62 such that the amount of deformation of said piezoelectric substrate 62 during the painting of edge painted area CR2 will be smaller than the amount of deformation of piezoelectric substrate 62 during the painting of normal painted area CR1.

By controlling the operation of robot arm R1 in this manner, painting may be executed in a state in which the amount of deformation of piezoelectric substrate 62 is smaller during the execution of the painting of edge painted area CR2 from the start of painting than it is during the execution of the painting of normal painted area CR1 on the interior of that area. Therefore, it will be possible to reduce the size of the droplets to be discharged from nozzle 54 during the painting of contour CR3 of painted area CR2. As a result, it will be possible to prevent the overflowing of paint from nozzle 54 due to an increase in the pressure changes in the paint during the execution of the painting of edge painted area CR2 from the start of painting.

Also, it will be possible to reduce any level differences between the impacted droplets during the formation of contour CR3 of painted area CR, and this will, in turn, make it possible to form sharp contours with higher painting quality.

In addition, in the example of embodiment described above, divided painting data D1 is formed for each paint pass PS, and each divided painting data D1 has edge painting data area DR2. However, of the series of (multiple) paint paths PS to form painted area CR, the pressure change will likely be greater at the start of painting in the first paint path PS and at the end of painting in the last paint path PS. Therefore, of the series of (multiple) paint paths PS to form painted area CR, it is also acceptable to perform control to inhibit the amount of deformation of piezoelectric substrate 62 in edge painted area CR2 at the start of painting in the first painting path PS and in edge painted area CR2 at the end of painting in the last paint path PS.

Also, in adjacent paint paths PS, it is acceptable to set edge painted area CR2 on a site where painting will be overlapped, or not to set said edge painted area CR2.

Further, in the above-noted example of embodiment, nozzle forming surface 52 in which nozzle 54 is exposed may be planar, but it may also be configured to form a convex site around the opening portion of nozzle 54. In this case, the circumference of the opening of nozzle 54 may be protruding around the entire circumference, or a portion of the entire circumference (single or multiple sites) may be protruding. By having a structure such as this, for example, the path length of nozzle 54 may extend, or the bank-like apex may be slightly separated from the opening of nozzle 54 in order to prevent leaked paint P1 from being formed in the vicinity of the opening of nozzle 54 during pressure changes.

Also, it is acceptable to have a configuration in which a recessed site that is recessed from the plane of nozzle forming surface 52 is formed in the circumference of the opening portion of nozzle 54. When using a structure this like, because leaked paint P1 will form in nozzle forming surface 52 that is downstream of the recessed portion, it will be possible to inhibit the formation of leaked paint P1 in the vicinity of the opening of nozzle 54 during pressure changes.

In the above-noted example of embodiment, in order to reduce the effect of meniscus vibrations in paint present in nozzle 54, head control unit 130 may also control piezoelectric substrate 62 to provide a Pull-Push-Pull type driving waveform such that the paint will be drawn into the interior of nozzle 54, pushed out, and then drawn inside once again.

### [EXPLANATION OF REFERENCES]

10 ... Painting robot, 11 ... Painting robot system, 20 ... Robot main body, 21... Base, 22a ... First rotating shaft, 22b ... Second rotating shaft, 22c ... Third rotating shaft, 22d ... Fourth rotating shaft, 22e ... Fifth rotating shaft, 22f ... Sixth rotating shaft, 24 ... First turning arm, 25 ... Second turning arm, 26 ... Rotating arm, 27... Wrist unit, 50 ... Painting head unit, 52 ... Nozzle forming surface, 53... Painting head, 54... Nozzle, 55... Nozzle row, 55A ... First nozzle row, 55B ... Second nozzle row, 59... Nozzle pressurization chamber, 59a ... Nozzle supply channel, 62 ... Piezoelectric substrate, 63a ... Piezoelectric ceramic layer, 63b ... Piezoelectric ceramic layer, 64 ... Common electrode, 65 ... Individual electrode, 70 ... Paint supply mechanism, 71 ... Paint circulation channel, 72 ... Paint supply channel, 73 ... Return flow channel, 74 ... Bypass channel, 75 ... External supply channel, 76 ... Air bubble removal member, 77 ... Three-way valve, 78 ... Switch valve, 79 ... Three-way valve, 80 ... Switching valve, 81 ... Discharge channel, 90 ... Supply pump (corresponding to the paint supply means), 91 ... Suction pump (corresponding to the paint recovery means), 92 ... First paint regulator (corresponding to the pneumatic control valve), 93 ... Second paint regulator (corresponding to the electrical control valve), 94 ... Degassing module, 95 ... Removal filter, 96 ... Suction conduit, 97 ... Vacuum pump, 100 ... Control unit, 110 ... Main control unit, 120 ... Arm control unit, 130 ... Head control unit, 140 ... Paint supply control unit, 150 ... Control memory, 200 ... Image processing apparatus, 210 ... Image processing unit, 220 ... Memory, 300 ... Position sensor, 310 ... Tilt sensor, CR ... Painted area, CR1 ... Normal painted area, CR2 ... Edge painted area, CR3 ... Contour, D1 ... Divided painting data, DR1 ... Normal painting data area, DR2 ... Edge painting data area, FM1 ... First flow meter, FM2 ... Second flow meter, P1 ... leaked paint, P2 ... discharged droplet, PS ... Paint path, R1 ... Robot arm, S1 to S8 ... Pressure sensors

## Claims

1. A painting robot to paint the painted area of a vehicle that is **characterized by** the fact that it is provided with
a painting head unit comprising a plurality of nozzles to discharge droplets and a painting head that is provided with a piezoelectric substrate that may be driven to discharge said droplets from said nozzles,
a robot arm to which said painting head unit is mounted at the tip and that will move said painting head unit to a desired position,
and a control unit that is equipped with a head control unit to control the operation of said piezoelectric substrate of said painting head and an arm control unit to control the operation of said robot arm,
wherein said head control unit will control the operation of said piezoelectric substrate such that the amount of deformation of said piezoelectric substrate during the painting of the edge painted area on the edge side of the painted area will be smaller than the amount of deformation of said piezoelectric substrate when painting the normal painted area on the inner side of the end side of the painted area.

2. The painting robot according to Claim 1 that is **characterized by** the fact that the drive frequency of said piezoelectric substrate when performing painting in said normal painted area will be a frequency for which the resonance of said piezoelectric substrate will be larger than the drive frequency of said piezoelectric substrate when performing painting of said edge painted area.

3. The painting robot according to Claim 1 that is **characterized by** the fact that said head control unit will control the drive of said piezoelectric substrate such that the amount of deformation of said piezoelectric substrate during the painting of said edge painted area will increase as it moves away from the contours of said edge painted area.

4. The painting robot according to Claim 1 that is **characterized by** the fact that said arm control unit will rotate said edge painted area located at the periphery of said painted area when performing painting of said painted area, and will also control the operation of said robot arm such that painting will be performed of said normal painted area that is enclosed within said edge painted area after the completion of the painting of said edge painted area, wherein said head control unit will control the operation of said piezoelectric substrate such that the amount of deformation of said piezoelectric substrate during the painting of said edge painted area will be smaller than the amount of deformation of said piezoelectric substrate during the painting of said normal painted area.

5. The painting robot according to Claim 1 that is **characterized by** the fact that a convex or concave site is formed around the opening part of said nozzle in the nozzle forming surface in which the opening part of said nozzle is exposed in said painting head.

6. The painting robot according to any one of Claims 1 to 5 that is **characterized by** the fact that said head control unit will perform control of said piezoelectric substrate such that it will apply a Pull-Push-Pull drive waveform to draw the paint into the inside of said nozzle, after which the paint is pushed out, and then the paint is once again drawn in after being pushed out.

7. A painting method using a painting robot to paint the painted area of a vehicle that is **characterized by** the fact that said painting robot is provided with
a painting head unit comprising a plurality of nozzles to discharge droplets and a painting head that is provided with a piezoelectric substrate that may be driven to discharge said droplets from said nozzles,
a robot arm to which said painting head unit is mounted at the tip and that will move said painting head unit to a desired position,
and a control unit that is equipped with a head control unit to control the operation of said piezoelectric substrate of said painting head and an arm control unit to control the operation of said robot arm,
wherein there is an edge painting step in which the head control unit controls the operation of said piezoelectric substrate such that the amount of deformation of the piezoelectric substrate during the painting of the edge painted area on the edge side of the painted area will be smaller than the amount of deformation of the piezoelectric substrate when painting the normal painted area on the inner side of the end side of the painted area,
and an interior painting step to perform the painting of the normal painted area by operating the piezoelectric substrate in the state in which the amount of deformation of the piezoelectric substrate will be larger than that during the edge painting step after the edge painting step.
